# EUROPEAN PATENT APPLICATION

(11) **EP 1 788 746 A2**
(43) Date of publication of application: **23.05.2007**
(21) Application number: 06124173.3
(22) Date of filing: 16.11.2006
(51) Int. Cl.: H04L 9/32

(54) **User authentication system and method for a communications network**

(30) Priority: 17.11.2005 CN 200510123543
(71) Applicant: NEC (China) Co., Ltd., Suite 1201, Tower E3 Oriental Plaza No. 1 East Chang An Ave. Dong Cheng District Beijing 100738 (CN)
(72) Inventor: Zeng, Ke, Park, Beijing 100738 (CN); Fujita, Tomoyuki, Park, Beijing 100738 (CN); Hsueh, Min-Yu, Park, Beijing 100738 (CN)
(74) Representative: Vossius & Partner

(57) **Abstract**

A user authentication system and method for a communications network is provided. The credential authority publishes an accumulator and issues tokens and credentials to the users who are authorized to access a service. The user computes by himself a derived credential based on the credential issued by the credential authority, and proves to the verifier using the derived credential. If a new user is authorized, other users and the verifier need not update any data. If a user ever authorized is banned, i.e., his/her token is revoked, the credential authority computes the updated accumulator based on the token issued to the banned user, and publishes a revocation increment data comprising the updated accumulator and the increment data about the revoked token. Other users compute their updated credentials by themselves based on the updated revocation increment data received. The revocation increment data can be published in several forms, and propagated among the credential authority, the users and the verifiers quickly.

## Description

The invention relates to communications network, and more particularly to apparatus and methods for authenticating users while preserving user privacy in a communications network.

Today, many online services, such as bidding service offered by an e-commerce web site, email service offered by Internet email server, P2P chat service offered by Instant Messaging server, etc., require registration or subscription of their users in order to access those services. There are many other examples for such kind of services where registration or subscription is mandated by the service provider. Generally, there are authentication authorities that help handle user authentication for the service providers.

Suppose a set of users has been granted access to a particular service. The set of users is called as "Whitelist". When a user A is trying to access the service (e.g., P2P file sharing service), some verifier (for example, a peer from whom user A wants to retrieve file) must make sure that user A is in the whitelist. If the verifier needs to contact the credential authority every time, the expense in terms of computation and communication is quite high both to the verifier and the credential authority. And the service provider is more vulnerable to Denial of Service attack that targets the credential authority.

It is possible for the verifier to have a local copy of the whitelist and make sure that user A is on it. However, if the verifier can not synchronize its local copy with the up to date whitelist of credential authority, a genuine user will be erroneously denied by the verifier. The reason why synchronization is necessary is that new users may be added in the authorized user set by the credential authority after the verifier has established its local copy of the whitelist. The immediate solution is to ask the verifier always be synchronized with the credential authority. However, since the synchronization interval is hard to predict, it implies low overall performance. Further, in case there are huge amount of verifiers, they will pose huge burden on the credential authority.

More severely, there are cases where the users tend to be anonymous toward the verifier. The user prefers to conceal his/her name, identifier or whatever, which may already be published in the whitelist, to the verifier even if he/she has successfully authenticated to the verifier. Clearly, simple whitelist for the verifier to consult is not a valid solution in case user privacy protection is desired.

Another tough problem is raised by the fact that access right of some existing users to the service may be revoked by the credential authority. In any real application system, admitting banned user is definitely unacceptable. At first glance, the solution may be no more than a blacklist maintained by the credential authority in which all banned users are listed. When user A is trying to access the service, some verifier makes sure that this user is not within the blacklist. The problem is that, as time elapses, the blacklist will increase linearly with the number of banned users. The verifier will have to invest more and more computing resources to compare user A with those published in blacklist one by one. This is incredibly inefficient. Again, it's necessary for the verifier to keep a local copy of the blacklist and consequently there is problem on efficient synchronization of the blacklist between the verifier and the credential authority. To cope with the ever increasing blacklist, the credential authority may at certain time update its setting for all the genuine users, hence removing all the banned users and achieving an empty blacklist again. This may to some extent alleviate the performance issue imposed on verifier by the massive blacklist. However, if huge number of genuine users is remaining registered with the credential authority, it's really painful for the credential authority to update all its genuine users. That's not all. When the user tends to be anonymously authenticated to the verifier, simple blacklist may not work. Because in this case, the banned user has no unique identifier that could be put into the blacklist, otherwise it contradicts with the requirement of anonymous authentication. Apparently, a unique identifier of a user will always reveal his/her privacy.

In academia, the problem on whitelist as well as blacklist for privacy protected authentication has been studied as accumulating values. Simply speaking, a set of values is accumulated in an accumulator. Here, accumulating a value means taking an inherent feature of the value into account or putting the value into a pool. Accumulator refers to a value, which reckons in a set of values or combines an inherent feature of a set of values. A prover can prove to a verifier that a specific value is accumulated in the accumulator without revealing the value being proved at all. This kind of study can be conceivably translated into an implementation of whitelist. Similarly, a prover can prove to a verifier that a specific value he/she held is not accumulated in the accumulator without revealing the value being proved at all. This kind of study can be conceivably translated into an implementation of blacklist. Mathematically, although proving a value not within an accumulator is possible, it is less efficient than proving a value is accumulated in the accumulator.

Accumulators were first introduced by J. Benaloh and M. de Mare in "One-way accumulators: A decentralized alternative to digital signatures", Advances in Cryptology-EUROCRYPT '93, volume 765 of LNCS, pages 274-285, Springer-Verlag, 1994, as a way to combine a set of values into one short accumulator, such that there is a witness that a given value was incorporated into the accumulator. The idea is extended by Benaloh and de Mare, N. Baric and B. Pfitzmann in "Collision -free accumulators and fail-stop signature schemes without trees," Advances in Cryptology-EUROCRYPT '97, volume 1233 of LNCS, pages 480-494. Springer Verlag, 1997, which provides a construction of the so-called collision-resistant accumulators, based on the strong RSA assumption. A handy property of accumulators as defined in the cited papers is that the values can be added one-by-one at unit cost. However, the deletion of a value from an accumulator cannot be made independent of the number of accumulated values. Further contribution is due to J. Camenisch and A. Lysyanskaya. In their article "Dynamic accumulators and application to efficient revocation of anonymous credentials", Advances in Cryptology-CRYPTO '2002, volume 2442 of LNCS, pages 61-76, 2002, dynamic accumulator is put forward, which is an accumulator that allows one to dynamically add and delete inputs, such that the cost of an add or a delete is independent of the number of accumulated values. J. Camenisch and A. Lysyanskaya also filed a patent No. US200310177352, entitled "Revocation of anonymous certificates, credentials, and access rights" for their dynamic accumulator. The above-mentioned documents are hereby incorporated by reference for all purpose.

The state-of-art dynamic accumulator is advantageous in that the cost of an add or a delete is independent of the number of accumulated values, in other words, independent of the number of authorized users. However, this conclusion is totally drawn from the view point of credential authority. When a user is added in the accumulator or deleted from the accumulator, all existing users as well as verifiers must update the accumulator and some other data already held by them. It's notable that inevitable computation for the users as well as verifiers to update such data is contributed by themselves, hence is independent of the number of accumulated values from the credential authority's point of view. But for each user as well as verifier, there is additional cost on consulting the credential authority for newly accumulated value and updated accumulator from time to time. Regarding deleted user, the verifier may nevertheless have to consult the credential authority over time for most recent accumulator in order to protect himself/herself from being deceived by newly deleted user, whereas it may not be necessary for the user to do the same so as to reduce the cost on the user in terms of computation resource and network resource consumption. Further, under certain circumstances, the accumulated value of genuine user may be considered secret and should never be published. The dynamic accumulator scheme cannot deal with such situation.

The invention provides a highly efficient user authentication system and method capable of preserving user privacy in a communications network.

According to one aspect of the invention, an apparatus for generating and updating user authentication data in a communications network is provided, comprising: an accumulator computing unit, being adapted to generate and update an accumulator for accumulating tokens of authorized users; an authorizing unit coupled to said accumulator computing unit; and a communication unit. The authorizing unit comprises a token selecting module, being adapted to select a token for a user to be authorized; and a credential generating module coupled to said token selecting module, being adapted to generate a credential from said token and said accumulator, wherein said credential is used for the user to prove that said token is accumulated in said accumulator. The communication unit is coupled to said accumulator computing unit, said authorizing unit and said network, being adapted to publish said accumulator across the network and transmitting said token and said credential to said user.

According to another aspect of the invention, a method for generating and updating user authentication data in a communications network is provided, comprising the steps of: generating and publishing an accumulator for accumulating tokens of authorized users; selecting a token for a user to be authorized; generating a credential from said token and said accumulator, wherein said credential is used for the user to prove that said token is accumulated in said accumulator; and transmitting said credential and said token to said authorized user..

According to another aspect of the invention, a terminal for a user to authenticate to a verifier in a communications network is provided. The network comprises at least one credential authority. The terminal comprises: a communicating unit coupled to said network; an accumulator storage unit coupled to said communicating unit, being adapted to store an accumulator generated by said credential authority; a token storage unit coupled to said communicating unit, being adapted to store a token issued from said credential authority; a credential storage unit coupled to said communicating unit, being adapted to store a credential generated from said accumulator and said token by said credential authority; a derived credential generating unit coupled to said credential storage unit, being adapted to generate a derived credential from the credential stored in said credential storage unit; and a proving unit coupled to said accumulator storage unit, said token storage unit and said derived credential generating unit, being adapted to perform knowledge proof with the verifier to prove that said token is accumulated in said accumulator using said derived credential, without revealing said token.

According to another aspect of the invention, a method for a user to authenticate to a verifier in a communications network is provided. The network comprises at least one credential authority. The method comprises the steps of: receiving an accumulator generated by the credential authority; receiving a token issued by said credential authority; receiving a credential generated from said token and said accumulator by said credential authority; computing a derived credential from said credential; and performing knowledge proof with said verifier to prove that said token is accumulated in said accumulator using said derived credential, without revealing said token.

According to another aspect of the invention, a communication system is provided, comprising at least one credential authority apparatus, at least one user terminal and at least one verifier terminal communicatively coupled by a network. The credential authority apparatus comprises an accumulator computing unit and an authorizing unit coupled thereto, wherein said accumulator computing unit is adapted to generate and update an accumulator for accumulating tokens of authorized users, and said authorizing unit comprises a token selecting module and a credential generating module coupled to said token selecting module. The user terminal comprises a derived credential generating unit and a proving unit. The verifier terminal comprises a verifying unit, When the user is authorized, said token selecting module selects a token and said credential generating module generates a credential from said token and said accumulator, said token and said credential being transmitted from said credential authority apparatus to said user terminal; said derived credential generating unit generates a derived credential from said credential; and said proving unit of said user terminal and said verifying unit of said verifier terminal performs knowledge proof using said derived credential to prove that said token is accumulated in said accumulator, without revealing said token.

According to another aspect of the invention, a method for authenticating users in a communications network is provided. The network comprising at least one credential authority and at least one verifier. The method comprises the steps of: generating and publishing an accumulator for accumulating tokens of authorized users by the credential authority; transmitting a token issued by said credential authority and a credential to a user to be authorized, said credential being generated from said token and said accumulator by said credential authority; computing a derived credential from said credential by the user; transmitting said derived credential from said user to the verifier; and performing knowledge proof between said user and said verifier using said derived credential to prove that said token is accumulated in said accumulator, without revealing said token.

According to another aspect of the invention, a manufactured article is provided. The manufactured article have a machine readable medium with instructions recorded thereon which, when executed by one or more processors, causes the processors to: generate and publish an accumulator for accumulating tokens of authorized users; select a token for a user to be authorized; generate a credential from said token and said accumulator, wherein said credential is used for the user to prove that said token is accumulated in said accumulator; and transmit said credential and said token to said authorized user.

According to another aspect of the invention, a manufactured article is provided. The manufactured article have a machine readable medium with instructions recorded thereon which, when executed by one or more processors, causes the processors to:receive an accumulator generated by a credential authority; receive a token issued by said credential authority; receive a credential generated from said token and said accumulator by said credential authority; compute a derived credential from said credential; and perform knowledge proof with a verifier to prove that said token is accumulated in said accumulator using said derived credential, without revealing said token.

According to the present invention, the accumulated tokens of the authorized users can be a secret that should never be published. The users and verifiers need not update accumulator when new user is authorized by CA. This is meaningful to CA, user and verifier, in terms of lower computation expense as well as network bandwidth consumption.

Further, the revocation update information can be retrieved in compressed format, which is advantageous in terms of lower computation expense as well as network bandwidth consumption. Also, the revocation update information can be published in compressed format, which is advantageous in terms of lower computation expense as well as network bandwidth consumption.

Further, the verifier may receive the most recent accumulator from the user instead of from CA, and the user may receive the revocation update information from the verifier instead of from CA and therefore synchronize to more recent accumulator. As a result, the burden of CA is greatly reduced, while the newly user authentication data can be propagated rapidly.

The foregoing and other objects of the invention, the various features thereof, as well as the invention itself, may be more fully understood from the following description, when read together with the accompanying drawings in which the like numeral reference indicates the like parts, and in which:

Fig. 1 is a block diagram showing an example of a communication system;

Fig. 2 is a diagram showing the process of how a user is authorized by the credential authority and verified by the verifier according to one embodiment of the invention;

Fig. 3 is a diagram showing an exemplary process when a user ever authorized is banned according to one embodiment of the invention;

Fig. 4 is a diagram showing a exemplary case where two revocation increments occurs amid two revocation packing;

Fig. 5 is a flow chart showing an exemplary process for the user to update the credential and accumulator with the credential authority according to one embodiment of the invention;

Fig. 6 is a diagram showing an exemplary actions between the credential authority, the user and the verifier according to one embodiment of the invention;

Fig. 7 is a diagram showing another exemplary actions between the credential authority, the user and the verifier according to one embodiment of the invention;

Fig. 8 is a flow chart showing an exemplary process for the verifier to update with the credential authority according to one embodiment of the invention;

Fig. 9 is a flow chart showing an exemplary process for the user to authenticate to the verifier when the accumulator the user held is stale according to one embodiment of the invention;

Fig. 10 is a flow chart showing an exemplary process for the verifier to verify the user when the accumulator the user held is stale according to one embodiment of the invention;

Fig. 11 is a block diagram showing an exemplary apparatus of the credential authority according to one embodiment of the invention;

Fig. 12 is a block diagram showing an exemplary terminal of the user according to one embodiment of the invention ; and

Fig. 13 is a block diagram showing an exemplary terminal of the verifier according to one embodiment of the invention.

The invention is made in view of the above disadvantages of the prior art.

With reference to the drawings, preferred embodiments of the invention are described in detail below, by way of example only.

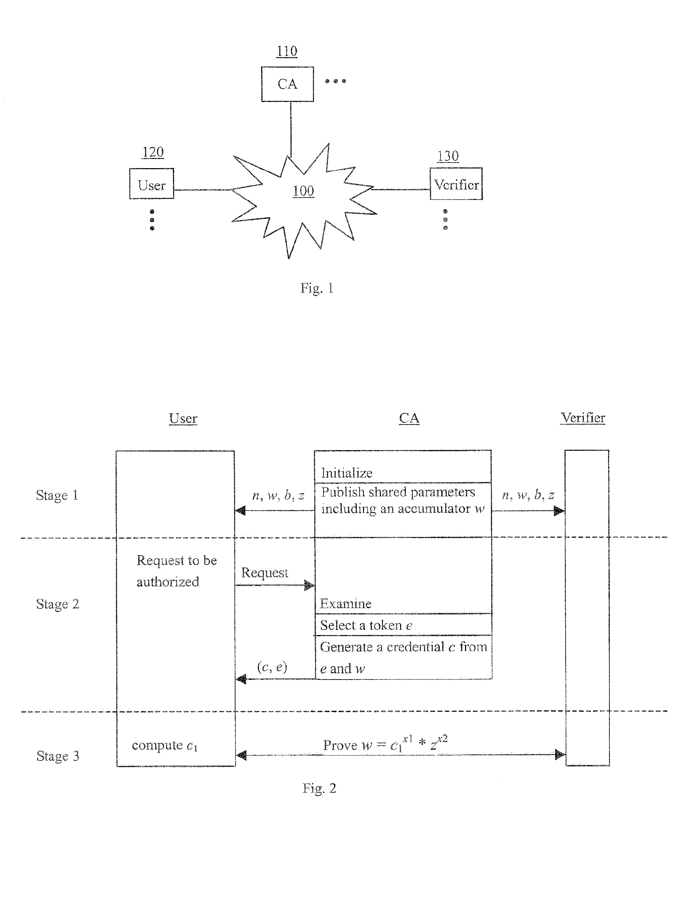

Fig. 1 is a block diagram showing an example of a communication system, in which three kinds of participants, i.e., credential authority (CA) 110, user 120 and verifier 130, communicate across the network 100.

The network 100 herein can be any kind of network, including but not limited to any computer communications network or telecommunication network. The user can be any client device suitable to connect to the network, such as a computer, a handheld device, a mobile phone, and so on. The credential authority CA can be a device adapted to connect to the network, which manages the credentials of a service. The verifier can be a host or a terminal that accepts a user's request after correctly authenticating the user

In particular, the credential authority CA is an entity that accepts the subscriptions of the users and issues tokens and credentials for the users to enable them to enjoy a certain service across the network. The verifier is one involved in the service who verifies the user's authorization data and accepts or refuses the user's request when the user attempts to access or enjoy the service.

Although not shown, there may be a service provider who providing the service. It should be noted that logically, CA may be a server or host outside the service provider, or a module embedded in the service provider that maintains the subscriber's information. In addition, the verifier may be a participant terminal of the service or a module of the service provider. In reality, the verifier could be a service provider providing an online service such as auction or it could be a peer in P2P network. For example, the service provider is an Instant Messaging server, and the verifier is a peer with which the user wants to chat. When the user requests to chat with the verifier, the verifier determined whether the user is authorized by CA. In another example, the verifier is a online database server. If a user requests to access the database located on the verifier's terminal, the verifier accept the user's request after checking the authorization data of the user issued by CA. In this example, the verifier is the service provider itself. In some cases, CA and verifier may coexist as modules in the service provider. That is, CA, verifier and service provider said here can be arbitrarily combined into one or more devices, or separated as different devices. This conceptual as well practical engineering variations of present invention should be known to those skilled in the art.

Note that, for the sake of simplicity, only one credential authority CA, one user and one verifier are shown explicitly in the drawings. However, there may be a plurality of each kind of participants.

The method of how a user is authorized by the credential authority and verified by the verifier according to one embodiment of the invention is explained below with reference to Fig. 2.

Firstly, at initialization stage (stage 1), CA initializes itself with modulus *n* that is suitable for strong RSA assumption to base on, and an accumulator *w* that is a random number in *Zₙ* ^{*}. Preferably, *n* is product of two safe primes and *w* belongs to *QR(n)* which is quadratic residue subgroup of *Zₙ* ^{*}. In addition, CA selects boundary *b<fi(n)* where *fi(...)* outputs Euler phi value of *n*. CA selects at random a commitment *z*. And CA initializes an empty revocation data for the users of the service and potential verifiers to consult. Then CA publishes *n*, *w*, *b*, *z* and the revocation data through a secure measure. For instance, CA may digitally sign *n*, *w*, *z* that can be verified by its well-known public-key.

Then at authorizing stage (stage 2), if a user wants to be authorized by CA, the user may pass certain examination with the credential authority, for instance by showing his/her social security identity in face-to-face manner, or transmitting the digital information to the credential authority via the network. After that, CA chooses appropriate prime *e* that is coprime to *fi(n)* and computes *c* = *W*^{*1*/*e*} (mod *n*). The two tuple (*c*, *e*) will be delivered to the user as a credential and a token, respectively. Under strong RSA assumption, it's intractable for other users to find the two tuple (*c*, *e*) given *w* and probably a polynomially bounded set of such two tuple in case of collusion attack. In addition, CA will store *e* in its database.

Before a verifier wants to verify any user, the verifier should contact the CA for *n, w*, *b* and *z*. At verifying stage (stage 3), when a user intends to be verified by the verifier, the user selects random *t<b* and computes *c₁* = *c *z^{t}* (mod *n*)*,* called as a derived credential. The user sends the derived credential *c₁* to the verifier and proves to the verifier that he/she knows a representation of *w = c₁^{x1}* * *z^{x2}* It's here obvious that *x*₁=*e* and *x₂=-t*e* therefore *c₁^{e}* * *z ^{-t*e}* = (*c* * *z^{t})^{e}* * *z^{-t*e}* = *c^{e}* = *w* (mod *n*). Proving knowledge of *x*₁ and *x*₂ without revealing *x*₁ and *x*₂ can be carried out efficiently by conventional means, e.g. by "D. Chaum, J. H. Evertse, J. van de Graaf, An Improved Protocol for Demonstrating Possession of Discrete Logarithms and Some Generalizations", Advances in Cryptology - EUROCRYPTO'87, pp. 127~141, 1987, which is hereby incorporated by reference. And the knowledge proof techniques are known to those skilled in the art.

According to above method, it can be found that authorizing a new user has no influence on existing genuine users. In other words, it's not only independent of the number of values having been accumulated but also independent of the number of values to be accumulated.

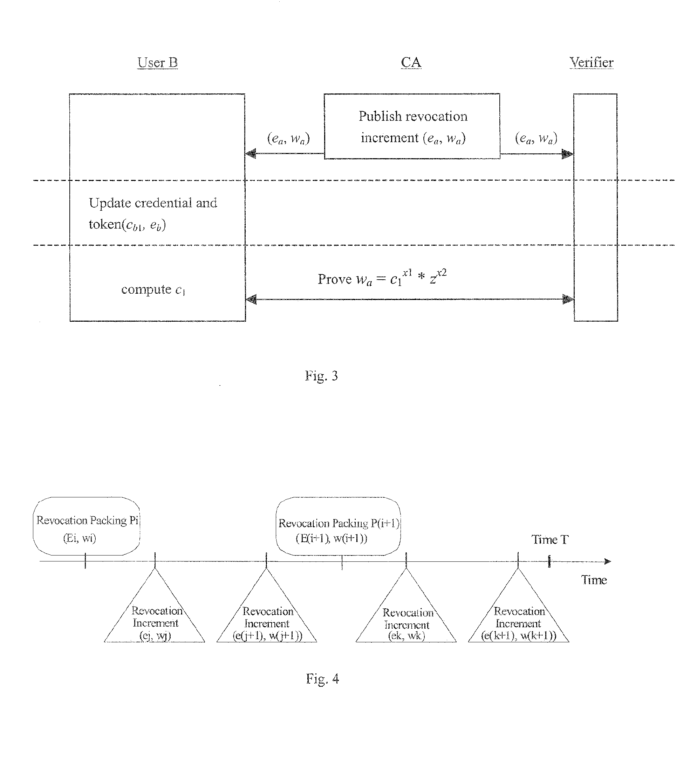

The method of how a user ever authorized is banned (i.e., the user's token is revoked) according to one embodiment of the invention is explained below with reference to Fig. 3.

Assuming that a user A, who possesses *(c_{a,} eₐ)* issued from CA, is to be banned, CA publishes *eₐ* in its revocation data and updates the accumulator *w* to *wₐ* = *w*^{*1*/*ea*} (mod *n*)*.* The two tuple (*eₐ, wₐ*) forms the revocation increment. Upon seeing the revocation increment (*eₐ*, *wₐ),* existing user other than user A, say user B who possesses (*c_{b}, e_{b}),* will compute *u *e_{b}* + *v*eₐ* = 1 according to Extended Euclidean Algorithm. On condition that CA selects different prime e for different user, there are unique *u* and *v* satisfies *u*e_{b}* + *v*eₐ* = 1. Finally user B updates its *c_{b}* to *c*_{*b*1} = *wₐ^{u}* * *c_{b}^{v}* (mod *n*) and the new two tuple held by user B is *(c*_{*b*1}*, e_{b})* where *c*_{*b*1} is the credential and *e_{b}* is the token. It's easy to verify that *c*_{*b*1}*^{eb}* = *wₐ^{u*eb}* * *c_{b}^{v*eb}* = *wₐ^{u*eb}* * *w*^{v}=*wₐ^{u*eb}* (wₐ^{ea})^{v}=wₐ ^{(u*eb+v*ea)} = wₐ* (mod ₙ), which means that user B computes by himself new credential that corresponds to the updated accumulator. On the other hand, given the revocation increment (*eₐ, wₐ*)*,* to compute *cₐ₁* s.t. *cₐ₁^{ea}* = *wₐ* (mod *n*) is impossible if RSA problem is hard.

It's apparent that after the accumulator *w* has been updated to *wₐ*, when a new user is to be authorized by the credential authority, *wₐ* should be used to compute the credential and the token for the new user. The previous *w* should never be used again.

Conceptually, the accumulator utilized by this invention has accumulated all possible tokens beforehand. However, in prior art, there is an explicit requirement for updating the accumulator anytime a new user is to be authorized. We emphasize that although all possible tokens have been accumulated beforehand in this invention, without assistance of CA, none of the credentials is available. This is guaranteed by the strong RSA assumption.

Further to the aforementioned basic revoking approach, suppose after the last time user B updated his/her credential and accumulator (therefore user B possesses *c_{b}^{eb}* = *w* (mod *n*)), *k* users have been banned, i.e. CA published *k* revocation increments (*e₁, w₁*), (*e₂, w₂*), ... , *(eₖ, wₖ).* Now when user B contacts CA in order to update his/her credential, user B can do as following: 1) retrieving *e₁, e₂,* ... , *e(ₖ₋₁)* and (*eₖ, wₖ*) from CA; 2) computing *E=(e₁* * *e₂* * ... * *e*ₖ); and 3) finding *u, v* s.t. *u*e_{b}* + *v*E =* 1. On condition that CA selects different prime *e* for different user, the greatest common divisor of *e_{b}* and *E* is 1. Hence there are unique *u* and *v* satisfies *u*e_{b},* + *v*E =* 1 according to Extended Euclidean Algorithm. User B updates its *c_{b}* to *c_{b1}* = *wₖ^{u} *c_{b}^{v}* (mod *n*). Note that *wₖ= (w₍ₖ₋₁₎)*^{1/*e*(*k*-1)} = ((*w*_{(*k*-2)})^{1/e(k-2)}) ^{1/e(k-1)}= *... = w*^{*1*/*E*} (mod *n*), it's easy to verify that *c_{b1}^{eb} = wₖ^{u*eb} * c_{b} ^{v*eb}* = *wₖ^{u*eb} * w^{v} = wₖ^{u*eb} * (wₖ^{E})^{v} =wₖ*^{*(u*eb*+ *v*E)*} = *wₖ* (mod *n*), which means that user B has got the credential that corresponds to the most recent accumulator.

Advantages of this compressed revocation increment approach in terms of network bandwidth usage as well as computation consumption are significant. Instead of retrieving (*e₁, w₁*), (*e₂, w*₂) ... , (*eₖ, wₖ*) from CA according to conventional teaching, user B now needs only retrieving *e₁, e₂,* ... , *eₖ* and *wₖ.* Obviously, (*k*-1)/2*k* % percent of data is omitted from transmission. For instance, *k*=10, the network utilization is 45% off. Regarding computation consumption, since each revocation increment entails 2 modular exponentiations, according to the conventional teaching, 2*k* modular exponentiations are inevitable. While the compressed revocation increment approach needs constantly 2 modular exponentiations. Apparently, (2*k*-2)/2*k* %, i.e. (*k*-1)/*k* % percent of most expensive modular exponentiations are eliminated. For instance, *k*=10, the computation consumption is 90% off.

According to policy of CA, CA may publish revocation increments as above form of (*e, w*) where *e* is the token being revoked and w is the updated accumulator after *e* has been revoked. Or CA may publish revocation increments as the compressed form of (*e₁, e*₂, ..., *e*ₖ, *w*) where *e*ᵢ, *i*=1,2, ..., *k,* are tokens belong to *k* users being banned and *w* is the updated accumulator after these users have been banned.

According to policy of CA, CA may publish revocation packing, where the latter revocation packing is indeed compressed form of revocation increments that occurred after the former revocation packing. In particular, the latter revocation packing comprises an updated accumulator and the product of each revoked tokens that occurred after the former revocation packing. Suppose after the former revocation packing *Pᵢ* is published, *k* users were banned whose tokens are *eᵢ*, *i*=1,2, ..., *k*, respectively. The latter revocation packing *P₍ᵢ₊₁₎* is (*E₍ᵢ₊₁₎*, *w₍ᵢ₊₁₎*), where *E₍ᵢ₊₁₎=e*₁ * *e*₂ * ... * *e*ₖ and *w₍ᵢ₊₁₎* is the updated accumulator after these users have been banned. As compared with the compressed revocation increment approach described above, the user retrieves *E₍ᵢ₊₁₎* instead of *e*₁, *e*₂, ... , *e*ₖ and the step for computing *e*₁ * *e*₂ * ... * *e*ₖ is omitted.

The policy of CA may be e.g. publish a revocation packing every week or publish a revocation packing every 10 users having been banned.

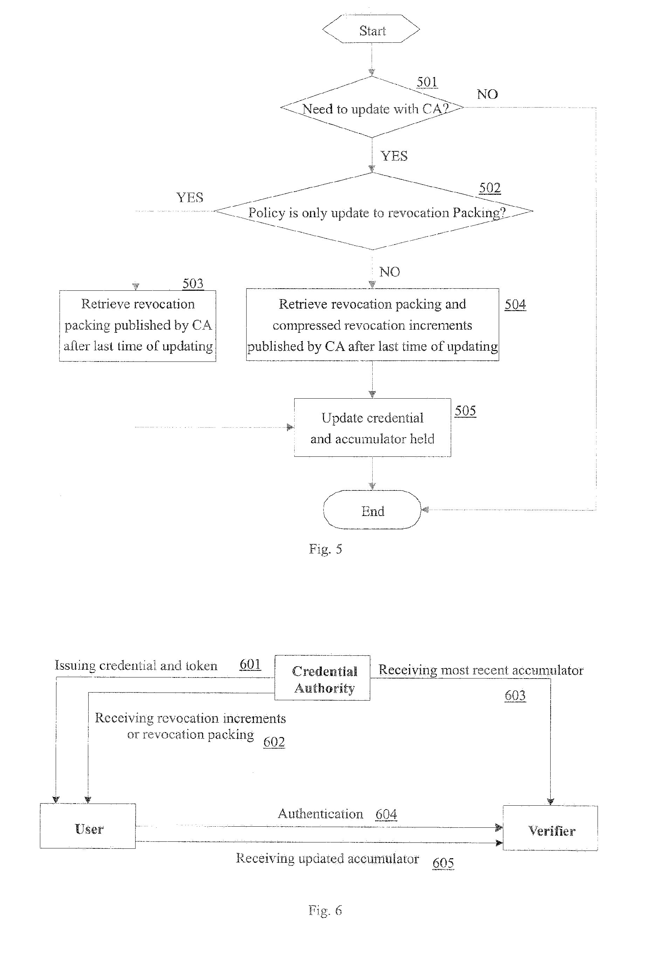

Fig. 4 illustrates the case where two revocation increments occurs amid two revocation Packing.

Since the latter revocation packing absorbs all the revocation increments occurred after the former revocation packing, it can be inferred that in Fig. 4, *E₍ᵢ₊₁₎* = *eⱼ* * *e₍ⱼ₊₁₎* and *w₍ᵢ₊₁₎* = *w₍ⱼ₊₁₎.* The merit is in the significance of network utilization. Suppose a verifier that is not involved in critical service selects the policy of only updating to the revocation packing. If the verifier has been updated to revocation packing *Pᵢ,* when at time T he/she intends to update again with CA, he/she will update to Packing *P₍ᵢ₊₁₎* which implies that he/she only needs to retrieve (*E_{(i+1),} w₍ᵢ₊₁₎*) from CA. As comparison, utilizing compressed revocation increment approach, the user needs to retrieve *eⱼ, e₍ⱼ₊₁₎* and *w₍ⱼ₊₁₎.* The saving is not straightforward. Because *E₍ᵢ₊₁₎* = *eⱼ* * *e₍ⱼ₊₁₎,* the transmitted bytes for *E₍ᵢ₊₁₎* and *eⱼ* plus *e*_{*(j+1*)} are the same. However, since CA must publish these revocation information in a secure manner, there does have something been omitted from transmission. For example, if CA digitally signs the revocation information, *eⱼ* and *e₍ⱼ₊₁₎* will have digital signatures attached, respectively. Now it's clear that when the revocation packing is introduced, transmitting *E₍ᵢ₊₁₎* instead of *eⱼ* and *e₍ⱼ₊₁₎* saves one digital signature. The saving in terms of reduced digital signatures is about 33% in this example. Generally, if *k* revocation increments occurs between 2 revocation packing, the saving compares to compressed revocation increment approach is (*k-*1)/(*k*+1) %. For instance, *k*=10, digital signatures to be transmitted is about 82% off.

Fig. 5 illustrates the process flow that will be carried out by the user in order to update the credential and the accumulator with CA. As shown in Fig. 5, the user determines whether updating is need at block 501. If yes, the user determines the policy for the updating at block 502. At block 502, if it is determined that the policy is only update to the revocation packing, the user retrieves the revocation packing published by CA after last time of updating at block 503, and then at block 505, updates the credential and the accumulator held according to the retrieved revocation packing. Otherwise, the user retrieves the revocation packing and the compressed revocation increments published by CA after last time of updating at block 504, and then at block 505, updates the credential and the accumulator held according to the retrieved revocation packing and compressed revocation increments

Fig. 6 illustrates, from the system architecture point of view, the actions and coordination between CA, user and verifier according to one embodiment of the invention.

As shown in Fig. 6, the CA issues a credential and a token to the user (601). The verifier needs only contact the CA for most recent accumulator (603), whereas what the user needs is revocation increment or revocation packing (602). It's important to note that only when a user is newly banned is there a revocation increment published by CA and to be received by the user. Similarly, only when a user is newly banned is there the most recent accumulator published by CA and to be received by the verifier. The natural consequence is efficiency because larger update interval may be possible because only when a user is banned there is necessity to contact CA for updating. In a growing up system where, for example, there are 10 users being authorized and 1 user being banned everyday, the advantage is obvious. Further, the update interval could be designed merely depending on the revocation history. For instance, the verifier can predict the next update time based on the history of time sequences when previous tokens were revoked. Prior art that has to contact CA for updating when new user is authorized can not benefit from the simplified design.

With the updated data, the user can authenticate to the verifier (604).

As illustrated in Fig 6, besides receiving the most recent accumulator from CA, the verifier could receive the updated accumulator from the user (605). This may happen when, for example, the user served as a verifier before and acquired the most recent accumulator from CA. When the user later tries to authenticate to the verifier who doesn't have the up to date accumulator, the user may send such information to the verifier. Since the updated accumulator is securely published by CA, e.g. digitally signed by CA, it is safe for the verifier to accept the updated accumulator not from CA but from the user to be verified.

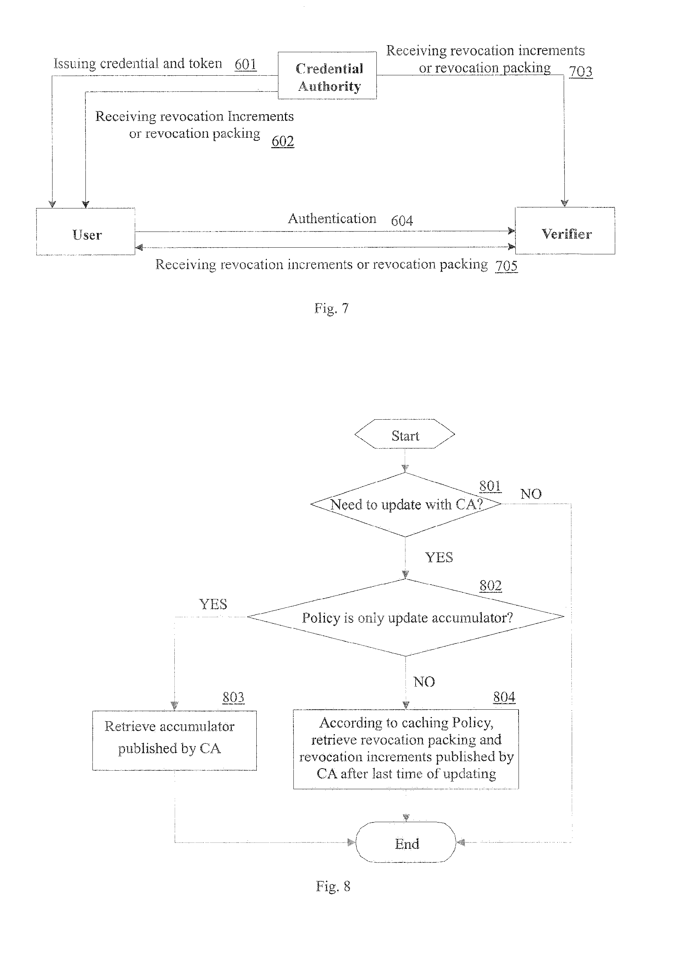

In another embodiment, where the verifier would like to cache a certain amount of revocation data, the user can update his/her credential where the necessary revocation information is received from the verifier, as illustrated in Fig. 7.

This scenario could happen when e.g. the user is only updated to the accumulator that is published by CA on Jun. 1, 2005, and the verifier is updated to the accumulator that is published by CA on Jun. 10, 2005. Between Jun. 1 and Jun. 10, two users are banned by CA, namely user P and user Q. Hence, two tokens are revoked after Jun.1 as *eₚ* and *e_{q}.* Suppose the verifier caches the revocation increments *(eₚ, wₚ)* and *(e_{q}, w_{q})* (703), when the user tries to authenticate to the verifier, since the accumulator held by the user is 10 days old, if the verifier accepts an accumulator that is no more than 15 days old, the user can directly authenticates to the verifier based on the accumulator published 10 days ago. On the other hand, if the verifier accepts an accumulator that is no more than 7 days old, the verifier may, according to compressed revocation increment approach, send *eₚ, e_{q},* and *w_{q}* to the user (705). Since the revocation increments are securely published by CA, e.g. digitally signed by CA, the user can accept them and accordingly compute his/her credential and update to the most recent accumulator. After that, the user can contact the verifier again and re-authenticate based on the most recent accumulator. A genuine user will definitely pass the authentication this time. Similar example can be constructed where the user receives revocation packing from the verifier.

Since only revocation information in certain time threshold will be cached by the verifier, for a system where there are not many malicious users, the storage cost of the verifier is relatively small and affordable. If some active verifiers are synchronized to CA with the most recent accumulator and store appropriate amount of revocation information (703), it's supposed that such information will be quickly propagated to users and other verifiers without these users and verifiers to contact CA anymore. This is considerably efficient in terms of reduction of the burden of CA, especially in the P2P environment.

Fig. 8 illustrates an exemplary process flow that will be carried out by the verifier in order to update with CA. As shown in Fig. 8, the verifier determines whether the updating is need at block 801. If yes, the verifier determines whether to update the accumulator only at block 802. If yes, the verifier retrieves the updated accumulator published by CA at block 803. Otherwise, the verifier retrieves the revocation packing and compressed revocation increments published by CA after last time of updating at block 804.

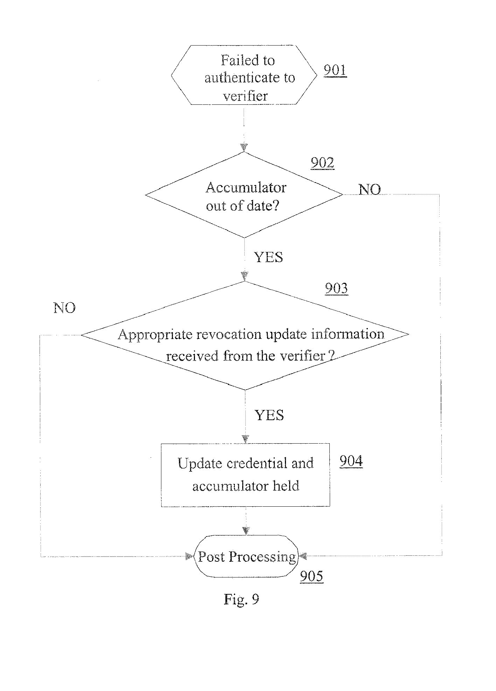

Fig. 9 illustrates an exemplary process flow that will be carried out by the user when he/she fails to authenticate to the verifier because the accumulator he/she held is stale. When the accumulator held by the user is stale, that is, older than that held by the verifier, he/she will fail to authenticate to the verifier (block 901). As shown in Fig. 9, the user checks whether his/her accumulator is out of date at block 902. If it is, the user tries to retrieve the appropriate revocation update information from the verifier at block 903 and updates the credential and accumulator he/she held at block 904. Then, the user could authenticate to the verifier by the updated data (block 905). If it is determined that the accumulator held by the user is not out of date at block 902, the process goes to the post processing (block 905) where, for example, the user may try to gain a new token and credential from CA, or wait for the verifier to update his/her data if the data held by the verifier is stale.

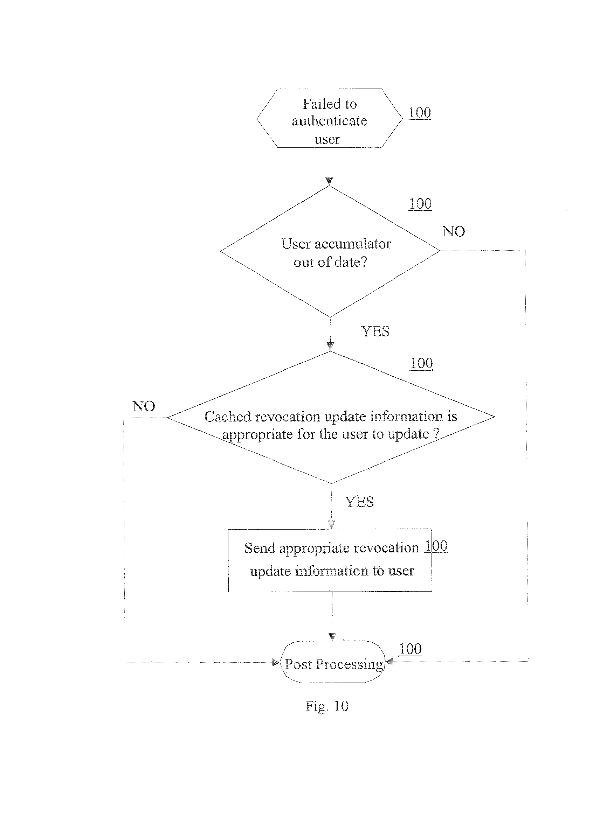

Fig. 10 illustrates an exemplary process flow that will be carried out by the verifier when the user fails to authenticate to the verifier (block 1001) because the accumulator the user held is stale. Corresponding to the process shown in Fig. 9, if it is determined that the accumulator held by the user is stale at block 1002, the verifier checks his/her cached revocation update information at block 1003. If the cached revocation update information is appropriate for the user to update, the verifier sends it to the user at block 1004. After the user updates his/her data, the he/she could re-authenticate to the verifier (block 1005). If it is determined that the accumulator held by the user is not out of date at block 1002, the process goes to the post processing (block 905) where, for example, the verifier may deny the user, or try to update the data held by himself.

It is also possible that the user fails to authenticate to the verifier because the accumulator held by the verifier is stale, that is, older than that held by the user. Similarly, if it is determined that the accumulator held by the verifier is stale, the verifier may update the accumulator he/she held with that held by the user and re-perform the verification. In this case, the verifier may receive the updated data from the user or the CA as described above.

In another embodiment of the invention, the user may also keep a certain amount of old data (e.g., past accumulators and their corresponding credentials) in addition to the most recent updated one. If it is determined that the accumulator held by the verifier is stale during the verification, the user may re-perform the verification using the old data corresponding to the accumulator held by the verifier. Similarly, the verifier may also keep a certain amount of past accumulators. If it is determined that the data held by the user is stale during the verification, the verifier may re-perform the verification using the old accumulator corresponding to the data held by the user. The above scenario could happen when e.g. the verifier could take a risk or is convinced that CA's actions after the time when said old data is published would have no influence on the confidence in that user.

As described above, if the user fails to authenticate to the verifier, the user may get updated information from the verifier or the verifier may get the updated information from the user. However, it is also possible for either of the verifier and the user to update with the CA when the authenticating is failed. The updating policy is flexible according to the particular circumstances.

According to the present invention, the accumulated value can be a secret that should never be published. The users and verifiers need not update the accumulator when new user is authorized by CA. This is meaningful to CA, user and verifier, in terms of lower computation expense as well as network bandwidth consumption.

Further, the revocation update information can be retrieved in compressed format, which is advantageous in terms of lower computation expense as well as network bandwidth consumption. And, the revocation update information can be published in compressed format, which is advantageous in terms of lower computation expense as well as network bandwidth consumption.

Further, the verifier may receive the most recent accumulator from the user instead of from CA, and the user may receive the revocation update information from the verifier instead of from CA and therefore synchronize to the more recent accumulator. As a result, the burden of CA is greatly reduced, while the newly user authentication data can be propagated rapidly.

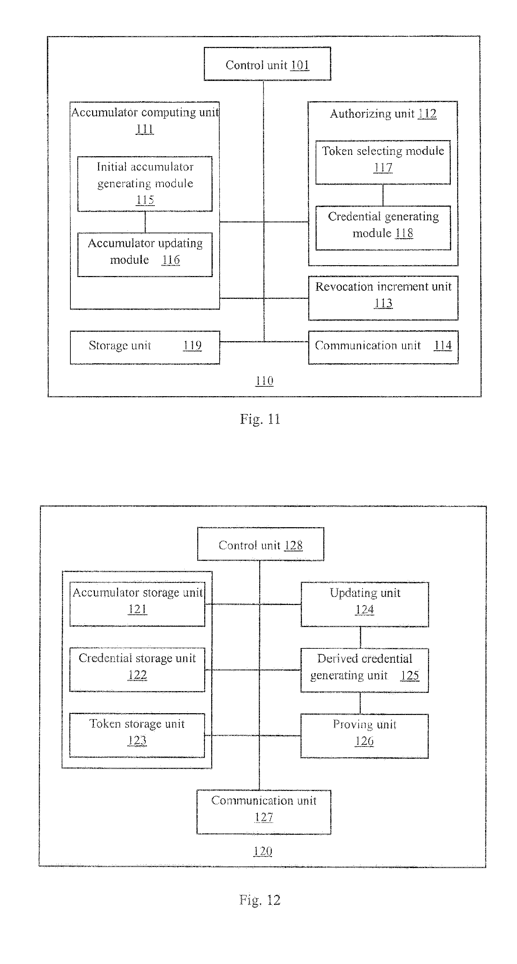

Fig. 11 shows an exemplary CA apparatus 110 according to one embodiment of the invention.

The apparatus 110 mainly comprises an accumulator computing unit 111 for generating and updating the accumulator, an authorizing unit 112 for authorizing a user to access a service and a communication unit 114 coupled to the accumulator computing unit 111 and the authorizing unit 112 for publishing the data and communicating with the user over the network.

The authorizing unit 112 may comprise a token selecting module 117 and a credential generating module 118 coupled each other. When a new user is to be authorized to access the service, the token selecting module 117 selects a token for that user, and the credential generating module 118 computes the credential for that user using the accumulator and the token selected by the token selecting module 117. Then, the communication unit 114 transmits the selected token and the computed credential to the user.

The accumulator computing unit 111 may comprise an initial accumulator generating module 115 for generating the initial accumulator when CA initializes and an accumulator updating module 116 for updating the accumulator when one or more tokens are revoked.

The apparatus 110 further comprises a revocation increment unit 113 coupled to the accumulator computing unit 111. When one or more tokens are revoked, the revocation increment unit 113 generates the revocation increment data according to the method of the invention, and publishes it via the communication unit 114. For example, the revocation increment unit 113 may assemble the revocation increment data into a set of revocation increments, a compressed revocation increment or a revocation packing as described above,

If the user must pass certain kind of examination before being authorized to access the service, the CA apparatus 110 may further comprise an examining unit for performing such examination.

Also, the apparatus 110 may comprise a storage unit 119 for storing the data used by CA, such as the tokens issued to the users, the system parameters, the data used by each unit, etc.

The apparatus 110 may further comprise a control unit 101, for control the policy of CA and the overall operation of each units or components. For example, the control unit 101 determines the time of updating and the form of the revocation increment data. The apparatus 110 may further comprise other units according to the particular application, such as a unit for receiving and analyzing the request of being authorized from the user, a unit for selecting and computing RSA parameters or other system parameters, etc. Since such unit or component is easily added by one skilled in the art, the detail explanation thereof is omitted.

The apparatus 110 can be a separate apparatus connected to the network, or a part of a server. It can be implemented as a specialized hardware, or a programmed function modules based on the function of the common hardware.

Fig. 12 shows an exemplary user terminal 120 according to one embodiment of the invention.

The user terminal 120 mainly comprises an accumulator storage unit 121 for storing the accumulator, a token storage unit 123 for storing the token issued by CA, a credential storage unit 122 for storing the credential issued by CA, a derived credential generating unit 125 coupled to the credential storage unit 123, a proving unit 126 coupled to the accumulator storage unit 121, the token storage unit 123 and the derived credential generating unit 125, and communication unit 127 coupled to the above units for communicating with CA and the verifiers. Note that, according to one embodiment of the invention, the accumulator storage unit 121 and the credential storage unit 122 only store the most recent accumulator and credential, respectively. However, in another embodiment of the invention, the accumulator storage unit 121 and the credential storage unit 122 store a certain amount of past accumulators and credentials in addition to the most recent one, respectively.

After the user is authorized to access the service by CA, the derived credential generating unit 125 generates the derived credential from the credential that has been stored in the credential storage unit 122. By the derived credential, the proving unit 126 may perform knowledge proof with the verifier as described above.

The user terminal 120 further comprises an updating unit 124 coupled to the accumulator storage unit 121 and the credential storage unit 122. After receiving the revocation increment data from CA or the verifier via the communication unit 127, the updating unit 124 computes the updated credential based on the revocation increment data, and updates the accumulator stored in the accumulator storage unit 121 and the credential stored in the credential storage unit 122. After that, the derived credential generating unit 125 will compute the derived credential from the updated credential. The new derived credential will be used in the knowledge proof with the verifier.

In addition, the user terminal 120 may further comprise a control unit 128 to control the operations of each unit. For example, the control unit 128 determines whether it is the time to update the data, and determined whether to receive the updated information from CA or the verifier. In addition to the above-mentioned storage units, the user terminal 120 may comprise other storage units for storing other data and information needed during the operation of the terminal. These storage units may be independent from each other, or incorporated in a signal memory as different storage area.

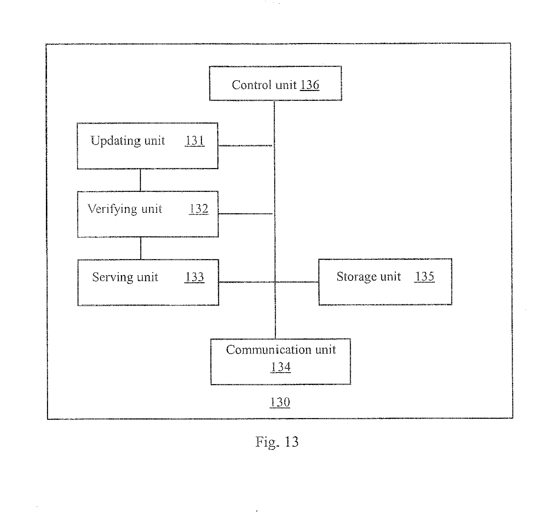

Fig. 13 shows an exemplary verifier terminal 130 according to one embodiment of the invention.

As shown in Fig. 13, the verifier terminal 130 mainly comprises an updating unit 131, a verifying unit 132, a serving unit 133, a communication unit 134, a storage unit 135 and a control unit 136. The verifying unit 132 is coupled to the communication unit 134, and adapted to verify the user by knowledge proof. If the verifying unit 132 determines that the user is authorized by CA, i.e., it is proved that the user's token is accumulated in the accumulator, it notifies the serving unit 133. Then the serving unit 133 may begin providing service to the user, for example, allowing the user to access specific content of the verifier terminal 130 or beginning instant conversation with the user. The updating unit 131 is coupled to the verifying unit 132. Under the control of the control unit 136, the updating unit 131 retrieves the updated accumulator or the revocation increment data from CA or the user. The updated accumulator is used by the verifying unit 132 to verify the user. The storage unit 135 is used to store the data necessary for the operation of the verifier terminal 130. According to one embodiment of the invention, the storage unit 135 further stores the revocation data (e.g., revocation packing or compressed revocation increments) published by CA. Further, according to another embodiment of the invention, the storage unit 135 may store a certain amount of the history data, for example, a series of past accumulator, in addition to the most recent data. The control unit 136 controls the operation of each unit. For example, the control unit 136 determines the time and fashion of updating. In one embodiment of the invention, the control unit 136 determines whether to receive the updated accumulator from the user or CA, or whether to provide the cached revocation data to the user.

The example of the apparatus of CA and the terminals of the user and verifier are described above. However, their structures are not limited to any particular embodiments. There may be many alternate structures or modifications to them. For example, two or more units described can be combined to a single hardware (e.g., the accumulator storage unit 121, the credential storage unit 122 and the token storage unit 123 shown in Fig. 12 can be a single memory). One unit also may be divided into different units (e.g., the storage unit 135 shown in Fig. 13 may be divided into several storage devices built in the updating unit 131, the verifying unit 132, the serving unit 133, the control unit 136, etc., respectively). Also, the user terminal 120 and the verifier terminal 130 may be combined in one terminal. It happens when the user also acts a verifier sometimes in the network.

The CA apparatus, the user terminal and the verifier terminal can be implemented based on specific hardware, or be implemented based on common hardware. For example, if the terminal is implemented as a general purpose computer, the terminal may further comprise common units appeared in the general purpose computer, such as a keyboard, a display, a data bus, etc. In such implementation, the control unit described above may be the central processing unit (CPU) of the computer, and each unit may be a software module, which when executed, causes the CPU performs the predetermined process.

The present invention may be implemented in hardware, software, firmware or a combination thereof and utilized in systems, subsystems, components or sub-components thereof. When implemented in software, the elements of the present invention are essentially programs or the code segments used to perform the necessary tasks. The program or code segments can be stored in a machine readable medium or transmitted by a data signal embodied in a carrier wave over a transmission medium or communication link. The "machine readable medium" may include any medium that can store or transfer information. Examples of the machine readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, etc. The code segments may be downloaded via computer networks such as the Internet, Intranet, etc.

The invention may be embodied in other specific forms without departing from the spirit or essential characteristics thereof. For example, the algorithms described in the specific embodiment can be modified while the system architecture does not depart from the basic spirit of the invention. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An apparatus for generating and updating user authentication data in a communications network, comprising:
an accumulator computing unit, being adapted to generate and update an accumulator for accumulating tokens of authorized users;
an authorizing unit coupled to said accumulator computing unit, comprising a token selecting module and a credential generating module coupled to said token selecting module, said token selecting module being adapted to select a token for a user to be authorized, and said credential generating module being adapted to generate a credential from said token and said accumulator, wherein said credential is used for the user to prove that said token is accumulated in said accumulator; and
a communication unit coupled to said accumulator computing unit, said authorizing unit and said network, being adapted to publish said accumulator across the network and transmitting said token and said credential to said user.

2. The apparatus of claim 1, wherein
said accumulator computing unit comprises an initial accumulator generating module adapted to generate an initial accumulator, and an accumulator updating module adapted to update the accumulator based on one or more revoked tokens, and
said apparatus further comprises a revocation increment unit coupled to said accumulator computing unit, being adapted to generate and publish a revocation increment data, said revocation increment data comprising an updated accumulator and a increment data about said revoked tokens.

3. The apparatus of claim 2, wherein said revocation increment unit generates said revocation increment data as at least one of the following:
a set of revocation increments, each of said revocation increments comprising one of said revoked tokens and a corresponding accumulator computed after that token is revoked;
a compressed revocation increment, comprising said updated accumulator and each said revoked tokens; and
a revocation packing, comprising said updated accumulator and a product of each said revoked tokens.

4. A method for generating and updating user authentication data in a communications network, comprising the steps of:
generating and publishing an accumulator for accumulating tokens of authorized users;
selecting a token for a user to be authorized;
generating a credential from said token and said accumulator, wherein said credential is used for the user to prove that said token is accumulated in said accumulator; and
transmitting said credential and said token to said authorized user.

5. The method of claim 4, further comprising, when one or more tokens are revoked,
updating the accumulator based on said revoked tokens; and
generating and publishing a revocation increment, data calculated from the time of the last updating, wherein revocation increment data comprises an updated accumulator and an increment data about said revoked tokens from the time of the last updating.

6. The method of claim 5, wherein revocation data is published in at least one of the following forms:
a set of revocation increments, each of said revocation increments comprising one of said revoked tokens and a corresponding accumulator computed after that token is revoked;
a compressed revocation increment, comprising said updated accumulator and each said revoked tokens; and
a revocation packing, comprising said updated accumulator and a product of each said revoked tokens.

7. A terminal for a user to authenticate to a verifier in a communications network, said network comprising at least one credential authority, said terminal comprising:
a communicating unit coupled to said network;
an accumulator storage unit coupled to said communicating unit, being adapted to store an accumulator generated by said credential authority;
a token storage unit coupled to said communicating unit, being adapted to store a token issued from said credential authority;
a credential storage unit coupled to said communicating unit, being adapted to store a credential generated from said accumulator and said token by said credential authority;
a derived credential generating unit coupled to said credential storage unit, being adapted to generate a derived credential from the credential stored in said credential storage unit; and
a proving unit coupled to said accumulator storage unit, said token storage unit and said derived credential generating unit, being adapted to perform knowledge proof with the verifier to prove that said token is accumulated in said accumulator using said derived credential, without revealing said token,

8. The terminal of claim 7, further comprising an updating unit coupled to said accumulator storage unit and said credential storage unit, being adapted to update the accumulator stored in said accumulator storage unit and the credential stored in said credential storage unit based on a revocation increment data received from one of said credential authority and the verifier.

9. The terminal of claim 8, wherein said accumulator storage unit further stores a predetermined amount of past accumulators in addition to the most recent updated accumulator, and said credential storage unit further stores a predetermined amount of past credentials in addition to the most recent updated credential.

10. A method for a user to authenticate to a verifier in a communications network, said network comprising at least one credential authority, said method comprising the steps of:
receiving an accumulator generated by the credential authority;
receiving a token issued by said credential authority;
receiving a credential generated from said token and said accumulator by said credential authority;
computing a derived credential from said credential; and
performing knowledge proof with said verifier to prove that said token is accumulated in said accumulator using said derived credential, without revealing said token.

11. The method of claim 10, further comprising:
receiving a revocation increment data from one of said credential authority and said verifier; and
updating said accumulator and said credential based on said revocation increment data.

12. The method of claim 11, further comprising:
storing a predetermined amount of past accumulators and credentials in addition to the most recent updated accumulator and credential, and wherein
said performing knowledge proof comprises performing knowledge proof with said verifier using the derived credential computed from the credential that corresponds to the accumulator held by said verifier.

13. A communications system, comprising at least one credential authority apparatus, at least one user terminal and at least one verifier terminal operatively coupled by a network, wherein
said credential authority apparatus comprises an accumulator computing unit and an authorizing unit coupled thereto, wherein said accumulator computing unit is adapted to generate and update an accumulator for accumulating tokens of authorized users, and said authorizing unit comprises a token selecting module and a credential generating module coupled to said token selecting module;
said user terminal comprises a derived credential generating unit and a proving unit; and
said verifier terminal comprises a verifying unit, and wherein
when said user is authorized, said token selecting module selects a token and said credential generating module generates a credential from said token and said accumulator, said token and said credential being transmitted from said credential authority apparatus to said user terminal;
said derived credential generating unit is adapted to generate a derived credential from said credential; and
said proving unit of said user terminal and said verifying unit of said verifier terminal is adapted to perform knowledge proof using said derived credential to prove that said token is accumulated in said accumulator, without revealing said token.

14. The system of claim 13, wherein
said credential authority apparatus further comprises a revocation increment unit, and
when one or more tokens are revoked, accumulator computing unit updates the accumulator based on said revoked tokens; and said revocation increment unit generates and publishes a revocation increment data comprising an updated accumulator and an increment data about said revoked tokens.

15. The system of claim 14, wherein said revocation increment data is published in at least one of the following forms:
a set of revocation increments, each of said revocation increments comprising one of said revoked tokens and a corresponding accumulator computed after that token is revoked;
a compressed revocation increment, comprising said updated accumulator and each said revoked tokens; and
a revocation packing, comprising said updated accumulator and a product of each said revoked tokens.

16. The system of claim 14 or 15, wherein said user terminal further comprises an updating unit for updating the accumulator and the credential held by the user terminal based on said revocation increment data received from one of said credential authority apparatus and said verifier terminal.

17. The system of claim 14, 15 or 16, wherein said verifier terminal further comprises an updating unit for updating the accumulator held by the verifier terminal by the updated accumulator received from of said credential authority apparatus and said user terminal.

18. A method for authenticating users in a communications network, said network comprising at least one credential authority and at least one verifier, comprising the steps of:
generating and publishing an accumulator for accumulating tokens of authorized users by the credential authority;
transmitting a token issued by said credential authority and credential to a user to be authorized, said credential being generated from said token and said accumulator by said credential authority;
computing a derived credential from said credential by the user;
transmitting said derived credential from said user to the verifier; and
performing knowledge proof between said user and said verifier using said derived credential to prove that said token is accumulated in said accumulator, without revealing said token.

19. The method of claim 18, further comprising, when one or more tokens are revoked by said credential authority,
updating the accumulator based on said revoked tokens by said credential authority; and
publishing a revocation increment data calculated from the time of the last updating by said credential authority, wherein said revocation increment data comprises an updated accumulator and an increment data about said revoked tokens from the of the last updating.

20. The method of claim 19, wherein said revocation increment data is published in at least of the following forms:
a set of revocation increments, each of said revocation increments comprising one of said revoked tokens and a corresponding accumulator computed after that token is revoked;
a compressed revocation increment, comprising said updated accumulator and each said revoked tokens; and
a revocation packing, comprising said updated accumulator and a product of each said revoked tokens.

21. The method of claim 19 or 20, further comprising, the user updating the held accumulator and the credential based on said revocation increment data received from one of said credential authority and said verifier.

22. The method of claim 19, 20 or 21, further comprising, the verifier updating the held accumulator by the updated accumulator received from one of said credential authority and said user.

23. A manufactured article having a machine readable medium with instructions recorded thereon which, when executed by one or more processors, cause the processors to:
generate and publish an accumulator for accumulating tokens of authorized users;
select a token for a user to be authorized;
generate a credential from said token and said accumulator, wherein credential is used for the user to prove that said token is accumulated in said accumulator; and
transmit credential and said to said authorized user.

24. The manufactured article of claim 23, wherein said instructions further cause the processors to:
when one or more tokens are revoked, update the accumulator based on said revoked tokens; and
generate and publish a revocation increment data calculated from the time of the last updating, wherein said revocation increment data comprises an updated accumulator and an increment data about said revoked tokens from the time of the last updating.

25. A manufactured article having a machine readable medium with instructions recorded thereon which, when executed by one or more processors, cause the processors to:
receive an accumulator generated by a credential authority;
receive a token issued by said credential authority;
receive a credential generated from said token and said accumulator by said credential authority;
compute a derived credential from said credential; and
perform knowledge proof with a verifier to prove that said token is accumulated in said accumulator using said derived credential, without revealing said token.

26. The manufactured article of claim 25, wherein said instructions further cause the processors to:
receive a revocation increment data from one of said credential authority and said verifier; and
update said accumulator and said credential based on said revocation increment data.
